# EUROPÄISCHE PATENTANMELDUNG

(11) **EP 2 806 148 A1**
(43) Veröffentlichungstag der Anmeldung: **26.11.2014**
(21) Anmeldenummer: 14167634.6
(22) Anmeldetag: 09.05.2014
(51) Int. Cl.: F02M 37/22, B01D 27/08, B01D 27/14, B01D 35/00, B01D 35/30, B01D 36/00

(54) **Kraftstofffilter für eine Brennkraftmaschine**

(30) Priorität: 22.05.2013 DE 102013209491
(71) Anmelder: Mahle International GmbH, 70376 Stuttgart (DE)
(72) Erfinder: Dassler, Steffen, 73257 Köngen (DE); Hoffmann, Dierk, 71229 Leonberg (DE); Jauss, Stefan, 73072 Donzdorf (DE); Kimmerle, Andreas, 71332 Waiblingen (DE); Preißinger, Markus, 71229 Leonberg (DE)
(74) Vertreter: BRP Renaud & Partner mbB Rechtsanwälte Patentanwälte Steuerberater

(57) **Zusammenfassung**

Die vorliegende Erfindung betrifft einen Kraftstofffilter (1) einer Brennkraftmaschine, insbesondere eines Kraftfahrzeugs, mit einem in einem Filtergehäuse (2) angeordneten Ringfilterelement (3), und mit einem Speichergehäuse (4), das einen Wassersammelraum (5) enthält, der zum Inneren des Ringfilterelements (3) offen und unterhalb desselben angeordnet ist. Erfindungswesentlich ist dabei, dass das Speichergehäuse (4) lösbar fest mit dem Ringfilterelement (3) verbunden ist, so dass es gemeinsam mit diesem im Filtergehäuse (2) montierbar, jedoch separat zum Ringfilterelement (3) aus dem Filtergehäuse (2) entnehmbar ist.

## Beschreibung

Die vorliegende Erfindung betrifft einen Kraftstofffilter einer Brennkraftmaschine, insbesondere eines Kraftfahrzeugs gemäß dem Oberbegriff des Anspruchs 1. Die Erfindung betrifft außerdem ein Einsatzmodul mit einem Ringfilterelement und einem daran lösbar befestigten Speichergehäuse für ein derartiges Kraftstofffilter.

Aus der EP 1 233 173 B1 ist ein gattungsgemäßes Kraftstofffilter einer Brennkraftmaschine mit einem in einem Filtergehäuse angeordneten Ringfilterelement bekannt, wobei an dem Ringfilterelement ein Speichergehäuse fest angeordnet ist, welches einen Wassersammelraum enthält, der zum Inneren des Ringfilterelements offen und unterhalb desselben angeordnet ist. Durch die einstückige Ausbildung des Speichergehäuses zusammen mit dem Filterelement bilden diese beiden Bauteile ein zusammen austauschbares Modul aus, so dass bei einem Austausch des Ringfilterelements zugleich auch stets das Speichergehäuse mit dem Wassersammelraum ausgetauscht wird.

Nachteilig bei dem bekannten Stand der Technik ist, dass das Speichergehäuse, d.h. der Wassersammelraum, auch dann ausgetauscht werden muss, sofern das Ringfilterelement ausgetauscht wird und zwar ohne Rücksicht darauf, ob das Speichergehäuse überhaupt ausgetauscht werden müsste und nicht stattdessen einfach entleert werden könnte oder noch gar nicht voll ist.

Die vorliegende Erfindung beschäftigt sich daher mit dem Problem, für ein Kraftstofffilter der gattungsgemäßen Art eine verbesserte oder zumindest eine alternative Ausführungsform anzugeben, die den aus dem Stand der Technik bekannten Nachteil vermeidet.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, ein Speichergehäuse für einen Wassersammelraum lösbar fest mit einem zugehörigen Ringfilterelement zu verbinden, und zwar so, dass diese beiden Komponenten gemeinsam und dadurch äußerst einfach in einem Filtergehäuse eines Kraftstofffilters montierbar sind, eine Entnahme des Ringfilterelements jedoch auch separat zum Filtergehäuse und nicht nur zusammen mit diesem möglich ist. Dies bietet den großen Vorteil, dass das Ringfilterelement entnommen werden kann, sofern dieses beispielsweise seine Lebensdauer erreicht hat, wobei der Wassersammelraum, d.h. das Speichergehäuse, wahlweise ebenfalls entnommen werden kann oder aber im Filtergehäuse des Kraftstofffilters verbleiben kann. Die zuletzt genannte Variante ist insbesondere dann besonders interessant, sofern das Speichergehäuse und das Filtergehäuse des Kraftstofffilters eine Ablassöffnung zum Entleeren des Speichergehäuses, d.h. des Wassersammelraums, aufweisen. In diesem Fall kann stets von neuem entschieden werden, ob das Speichergehäuse turnusmäßig mit dem Ringfilterelement ausgetauscht oder aber beispielsweise beim Austauschen des Ringfilterelements lediglich geleert wird. Selbstverständlich ist beim Vorsehen einer Ablassöffnung auch ein Entleeren des Speichergehäuses unabhängig von einem Austausch des Ringfilterelements möglich. Die Möglichkeit der lösbaren Befestigung des Speichergehäuses am Ringfilterelement bietet andererseits jedoch den großen Vorteil, dass das Speichergehäuse nicht einzeln im Filtergehäuse des Kraftstofffilters montiert und ausgerichtet werden muss, um anschließend das Ringfilterelement zu montieren. Vielmehr ist es mit dem erfindungsgemäßen Ringfilterelement und Speichergehäuse möglich, diese beiden Komponenten vor einer Montage aneinander zu befestigen und dadurch bereits vorauszurichten, wodurch sich die Montage des zusammengesetzten Moduls im Filtergehäuse des Kraftstofffilters deutlich vereinfacht.

Bei einer vorteilhaften Weiterbildung der erfindungsgemäßen Lösung sind das Ringfilterelement oder das Speichergehäuse mittels einer druckstabilen aber zuginstabilen Steckverbindung miteinander verbunden. Eine derartige Steckverbindung ermöglicht ein Einschieben des aus dem Ringfilterelement und dem Speichergehäuse bestehenden Moduls in das Filtergehäuse des Kraftstofffilters, wobei jedoch ein Entfernen des Ringfilterelements aus dem Filtergehäuse aufgrund der zuginstabilen Steckverbindung zum Speichergehäuse separat möglich ist, so dass das Ringfilterelement aus dem Filtergehäuse entfernt werden kann, das Speichergehäuse aber in diesem verbleibt.

Bei einer weiteren vorteilhaften Ausführungsform der erfindungsgemäßen Lösung weist das Ringfilterelement an seiner unteren Endscheibe eine in Axialrichtung offene Ringnut auf, in die das Speichergehäuse mit einer axial abstehenden Ringfeder eingreift. Eine derartige ringförmige Nut- und Federverbindung stellt dabei eine in dem vorherigen Absatz beschriebene druckstabile aber zuginstabile Steckverbindung dar, über welche zwar Druckkräfte übertragen werden können, nicht aber Zugkräfte. Eine derartige ringförmige Nut- und Federverbindung ermöglicht darüber hinaus die Realisierung einer Dichtfunktion zwischen dem Ringfilterelement und dem Speichergehäuse.

Zweckmäßig weist das Speichergehäuse an seiner Außenseite eine Ringdichtung auf, die an einer Innenseite des Filtergehäuses des Kraftstofffilters radial anliegt, sofern das Speichergehäuse in das Filtergehäuse eingesetzt ist. Eine derartige Ringdichtung kann beispielsweise als O-Ringdichtung oder als Schaumgummi ausgebildet sein, wobei selbstverständlich auch die Ausbildung als Dichtlippe oder Dichtkante denkbar ist.

Die vorliegende Erfindung beruht weiter auf dem allgemeinen Gedanken, ein Einsatzmodul mit einem Ringfilterelement und einem daran lösbar befestigten Speichergehäuse bereitzustellen, welches in einen in den vorherigen Absätzen beschriebenes Kraftstofffilter einsetzbar ist. Eine Verbindung zwischen dem Ringfilterelement und dem Speichergehäuse des Einsatzmoduls kann dabei ebenfalls mittels einer druckstabilen aber zuginstabilen Steckverbindung realisiert werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine mögliche Ausführungsform eines erfindungsgemäßen Kraftstofffilters in einer Schnittdarstellung,
- Fig. 2: eine mögliche Aussparungen am Ringfilterelement sowie ein Rastmittel des Speichergehäuses,
- Fig. 3: eine Abwicklung möglicher Aussparungen am Ringfilterelement sowie ein Rastmittel des Speichergehäuses.

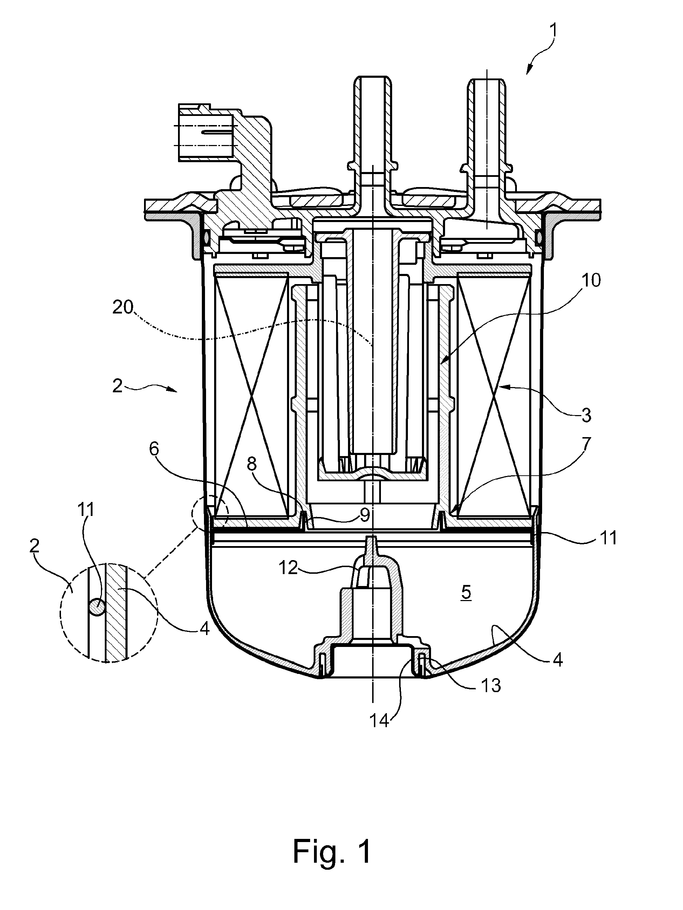

Entsprechend der Fig. 1 weist ein erfindungsgemäßes Kraftstofffilters 1 einer im Übrigen nicht gezeigten Brennkraftmaschine, insbesondere in einem Kraftfahrzeug, ein in einem Filtergehäuse 2 angeordnetes Ringfilterelement 3 auf. Unterhalb des Ringfilterelements 3 ist ein Speichergehäuse 4 angeordnet, das einen Wassersammelraum 5 umgibt/enthält, der zum Inneren des Ringfilterelements 3 hin offen ist. Erfindungsgemäß ist nun das Speichergehäuse 4, welches beispielsweise aus Kunststoff ausgebildet sein kann, lösbar fest mit dem Ringfilterelement 3, insbesondere mit dessen unterer Endscheibe 6 lösbar fest, verbunden, so dass es gemeinsam mit diesem im Filtergehäuse 2 montierbar, jedoch separat zum Ringfilterelement 3 aus dem Filtergehäuse 2 entnehmbar ist. Das Ringfilterelement 3 bildet dabei zusammen mit dem Speichergehäuse 4 ein Einsatzmodul, welches es ermöglicht, das Einsatzmodul, bestehend aus Ringfilterelement 3 und Speichergehäuse 4, vorzufertigen und gemeinsam vergleichsweise einfach im Filtergehäuse 2 zu montieren. Bei einem Austausch des Ringfilterelements 3 kann das Speichergehäuse 4 zusammen mit dem darin angeordneten Wassersammelraum 5 zunächst im Filtergehäuse 2 des Kraftstofffilters 1 verbleiben und nach dem Ausbau des Ringfilterelements 3 ebenfalls aus dem Filtergehäuse 2 entnommen werden.

Zur Realisierung der lösbaren Befestigung zwischen dem Ringfilterelement 3 einerseits und dem Speichergehäuse 4 andererseits sind diese beiden Bauteile 3, 4 mittels einer druckstabilen aber zuginstabilen Steckverbindung 7 miteinander verbunden. Eine derartige Steckverbindung 7 ermöglicht die Übertragung von Druckkräften in beide Richtungen, nicht aber die Übertragung von Zugkräften. Betrachtet man dabei das Ringfilterelement 3 genauer, so kann man erkennen, dass an seiner unteren Endscheibe 6 eine in Axialrichtung offene Ringnut 8 angeordnet ist, in welche das Speichergehäuse 4 mit einer axial in Richtung des Ringfilterelements 3 abstehenden Ringfeder 9 eingreift. Eine derartige Nut- und Federverbindung ermöglicht zugleich die Ausbildung einer Labyrinthdichtung, durch welche eine Abdichtung zwischen dem Ringfilterelement 3 und dem Speichergehäuse 4 realisiert werden kann. Die Ringnut 8 ist dabei axial fluchtend zu einer Innenzarge 10 des Ringfilterelements 3 angeordnet und insbesondere einstückig mit der unteren Endscheibe 6 bzw. der Innenzarge 10 ausgebildet. Die Innenzarge 10 dient dabei in bekannter Weise zur Abstützung des Filtermaterials des Ringfilterelements 3.

An seiner Außenseite kann das Speichergehäuse 4 darüber hinaus eine Ringdichtung 11 aufweisen, die an einer Innenseite des Filtergehäuses 2 des Kraftstofffilters 1 radial anliegt, sofern das Speichergehäuse 4 in das Filtergehäuse 2 eingesetzt ist.

An einer Unterseite besitzt das Speichergehäuse 4 eine Ablassöffnung 12, die mit einer nicht gezeigten Wasserablassschraube verschließbar ist. Dadurch ist es möglich, den Wassersammelraum 5 entweder über die Ablassöffnung 12 bei Bedarf zu entleeren, so dass dieser rein theoretisch über die gesamte Lebensdauer des Kraftstofffilters 1 im Filtergehäuse 2 desselben verbleiben kann und lediglich das Ringfilterelement 3 bedarfsmäßig getauscht wird. Alternativ hierzu ist es auch denkbar, dass das Speichergehäuse 4 mit dem darin angeordneten Wassersammelraum 5 turnusmäßig zusammen mit dem Ringfilterelement 3 ausgetauscht wird, d.h. miteinander aus dem Filtergehäuse 2 entnommen wird, oder aber beispielsweise nur bei jedem zweiten Austausch des Ringfilterelements 3.

Koaxial zur Ablassöffnung 12 weist das Speichergehäuse 4 einen Ringkragen 13 auf, an dem radial innen eine geschlossene umlaufende Dichtkontur integral ausgeformt ist, die an einem Ablassdom 14 des Filtergehäuses 2 dichtend anliegt, sofern das Speichergehäuse 4 in das Filtergehäuse 2 eingesetzt ist.

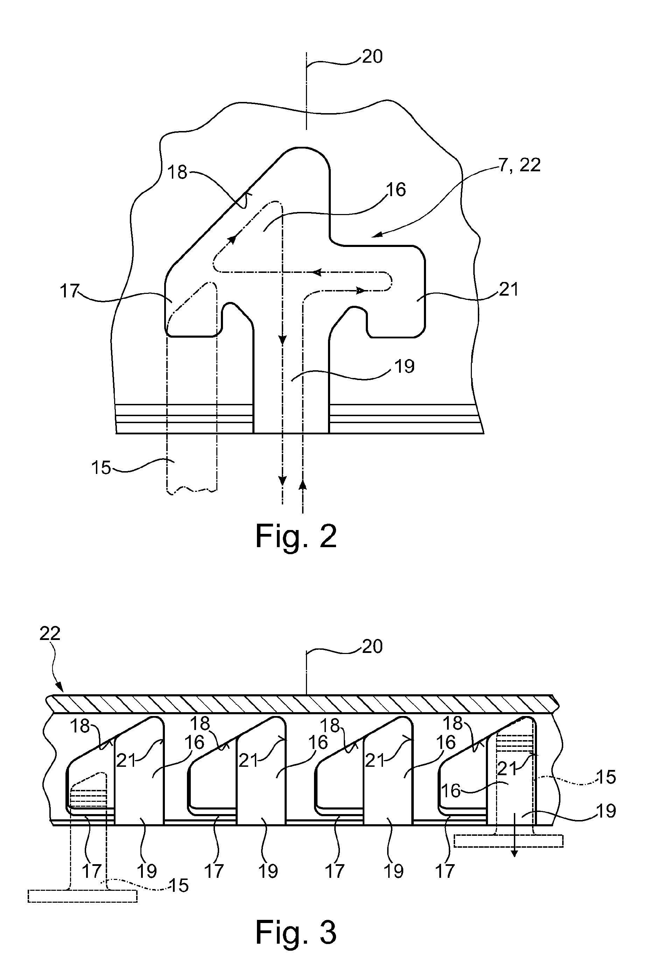

Generell können das Ringfilterelement 3 und das Speichergehäuse 4 auch mittels einer druckstabilen aber zumindest in manchen Zuständen zuginstabilen Steckverbindung 7 miteinander verbunden sein, insbesondere über eine als mittels Druckimpuls lösbare Rastverbindung 22. Eine solche ist beispielsweise in den Fig. 2 und 3 dargestellt. Betrachtet man die Figuren 2 und 3 so kann man erkennen, dass am Speichergehäuse 4 radial wirkende Rastmittel 15 vorgesehen sind, die mit am Ringfilterelement 3 angeordneten Aussparungen 16 zusammenwirken, wobei die Aussparungen 16 zumindest einen Rückhaltebereich 17, einen Translationsbereich 18, einen Schließbereich 21 und einen Öffnungsbereich 19 aufweisen. Der Translationsbereich 18 ist in Bezug auf eine Achse 20 des Ringfilterelements 3 um ca. 0-60° geneigt ist, so dass über eine impulsartig längs der Achse 20 aufgebrachte Bewegung eine Relativdrehbewegung zwischen dem Speichergehäuse 4 und dem Ringfilterelement 3 mit den Aussparungen 16 erfolgt und dadurch die Rastmittel 15 in die Öffnungsbereiche 19 verstellt und die Rastverbindung 22 gelöst werden.

Gemäß der Fig. 3 wird eine Abwicklung der Aussparungen 16 gezeigt. Hierbei sind auf den gesamten Umfang einer zylindrischen Mantelfläche vier in regelmäßigen Abständen angeordnete Aussparungen 16 zu sehen. Jede Aussparung 16 hat in der zweidimensionalen Abwicklung die Form einer gestauchten Eins. Jede Aussparung 16 ist in bestimmte Funktionsbereiche aufgeteilt. Werden nun das Ringfilterelement 3 und das Speichergehäuse 4 miteinander verschraubt, so legen sich die Rastmittel 15 am Schließbereich 21 der Aussparung 16 an. Der Rückhaltebereich 17 der Aussparung 16 hat die Aufgabe, das Speichergehäuse 4 beim Herausnehmen des Ringfilterelements 3 mit diesem zu verbinden, so dass beide Teile einhändig herausgenommen werden können. Um nun das Ringfilterelement 3 vom Speichergehäuse 4 mit den Aussparungen 16 zu trennen, ohne eine weitere Hand zur Hilfe nehmen zu müssen, ist der Translationsbereich 18 in der Aussparung 16 vorgesehen, der, bezogen auf die Achse 20, einen Winkel von 60 Grad oder zwischen 0 und 60 Grad aufweist. Durch den in der Aussparung 16 vorgesehenen Translationsteil 18 kann über eine z.B. impulsartig längs der Achse 2 aufgebrachte Vertikalbewegung eine Relativdrehbewegung zwischen Ringfilterelement 3 und Speichergehäuse 4 erfolgen, die die Rastmitteln 15 in die Öffnungsbereiche 19 verstellt und dadurch die Rastverbindung 22 löst. Im Öffnungsbereich 19 der Aussparung 16 ist der Rückhaltebereich 17 unterbrochen, so dass das Ringfilterelement 3 samt seinen Rastmitteln 15 ohne Widerstand aus dem Speichergehäuse 4, das die Aussparungen 16 enthält, herausgezogen werden kann.

In Fig. 2 wird eine Variante der Aussparung 16 mit ausgeprägterem Rückhaltebereich 17 dargestellt. Ebenfalls mittels gestrichelter Linie angedeutet, sind die Rastmittel 15.

Alternativ ist auch eine Bajonettverschlussverbindung zwischen dem Ringfilterelement 3 und dem Speichergehäuse 4 denkbar, insbesondere sofern der Filtergehäusedeckel mit dem Filtergehäusetopf verschraubt wird. Bei einem Aufschrauben des Filtergehäuses 2 könnte somit der Bajonettverschluss gelöst werden.

Mit dem erfindungsgemäßen Kraftstofffilter 1 und dem aus dem Ringfilterelement 3 und dem daran lösbar befestigten Speichergehäuse 4 gebildeten Einsatzmodul ist es möglich, das Einsatzmodul als einteiliges Einbauteil im Filtergehäuse 2 des Kraftstofffilters 1 zu montieren, jedoch das Ringfilterelement 3 separat zum Speichergehäuse 4 zu entnehmen. Das Speichergehäuse 4 kann somit wahlweise mit dem Ringfilterelement 3 ausgetauscht werden, oder aber seine Wasserablassöffnung 12 entleert werden. Der weitere besondere Vorteil des erfindungsgemäßen Kraftstofffilters 1 liegt darin, dass die Reinseite des Ringfilterelements 3, d.h. die Innenseite, vor Schmutz geschützt ist.

## Patentansprüche

1. Kraftstofffilter (1) einer Brennkraftmaschine, insbesondere eines Kraftfahrzeugs,
- mit einem in einem Filtergehäuse (2) angeordneten Ringfilterelement (3),
- mit einem Speichergehäuse (4), das einen Wassersammelraum (5) enthält, der zum Inneren des Ringfilterelements (3) offen und unterhalb desselben angeordnet ist,
**dadurch gekennzeichnet,**
**dass** das Speichergehäuse (4) lösbar fest mit dem Ringfilterelement (3) verbunden ist, so dass es gemeinsam mit diesem im Filtergehäuse (2) montierbar, jedoch separat zum Ringfilterelement (3) aus dem Filtergehäuse (2) entnehmbar ist.

2. Kraftstofffilter nach Anspruch 1,
**dadurch gekennzeichnet,**
**dass** das Ringfilterelement (3) und das Speichergehäuse (4) mittels einer druckstabilen aber zumindest in manchen Zuständen zuginstabilen Steckverbindung (7) miteinander verbunden sind.

3. Kraftstofffilter nach Anspruch 2,
**dadurch gekennzeichnet,**
**dass** die Steckverbindung (7) als mittels Druckimpuls lösbare Rastverbindung (22) ausgebildet ist.

4. Kraftstofffilter nach Anspruch 3,
**dadurch gekennzeichnet,**
**dass** am Speichergehäuse (4) radial wirkende Rastmittel (15) vorgesehen sind, die mit am Ringfilterelement (3) angeordneten Aussparungen (16) zusammenwirken, wobei die Aussparungen (16) zumindest einen Rückhaltebereich (17), einen Translationsbereich (18) und einen Öffnungsbereich (19) aufweisen.

5. Kraftstofffilter nach Anspruch 4,
**dadurch gekennzeichnet,**
**dass** der Translationsbereich (18) in Bezug auf eine Achse (20) des Ringfilterelements (3) um ca. 0-60° geneigt ist, so dass über eine impulsartig längs der Achse (20) aufgebrachte Bewegung eine Relativdrehbewegung zwischen dem Speichergehäuse (4) und dem Ringfilterelement (3) mit den Aussparungen (16) erfolgt und dadurch die Rastmittel (15) in die Öffnungsbereiche (19) verstellt und die Rastverbindung (22) löst.

6. Kraftstofffilter nach Anspruch 1 oder 2,
**dadurch gekennzeichnet,**
**dass** das Ringfilterelement (3) an seiner unteren Endscheibe (6) eine in Axialrichtung offene Ringnut (8) aufweist, in welche das Speichergehäuse (4) mit einer axial abstehenden und komplementär ausgebildeten Ringfeder (9) eingreift.

7. Kraftstofffilter nach Anspruch 6,
**dadurch gekennzeichnet,**
**dass** die Ringnut (8) axial fluchtend zu einer Innenzarge (10) des Ringfilterelements (3) angeordnet ist.

8. Kraftstofffilter nach einem der Ansprüche 1 bis 7,
**dadurch gekennzeichnet,**
**dass** das Speichergehäuse (4) an seiner Außenseite eine Ringdichtung (11) aufweist, die an einer Innenseite eines Filtergehäuses (2) des Kraftstofffilters (1) radial anliegt, wenn das Speichergehäuse (4) in das Filtergehäuse (2) eingesetzt ist.

9. Kraftstofffilter nach einem der Ansprüche 1 bis 8,
**dadurch gekennzeichnet,**
**dass** das Speichergehäuse (4) an seiner Unterseite eine Ablassöffnung (12) aufweist, die mittels einer Wasserablassschraube verschließbar ist, wobei koaxial zur Ablassöffnung (12) einen Ringkragen (13) vorgesehen ist, an dem radial innen eine geschlossen umlaufende Dichtkontur integral ausgeformt ist, die an einem Ablassdom (14) radial anliegt, wenn das Speichergehäuse (4) in das Filtergehäuse (2) eingesetzt ist.

10. Einsatzmodul mit einem Ringfilterelement (3) und einem daran lösbar befestigten Speichergehäuse (4) für Kraftstofffilter nach einem der Ansprüche 1 bis 9, wobei das Ringfilterelement (3) und das Speichergehäuse (4) mittels einer druckstabilen aber zumindest in manchen Zuständen zuginstabilen Steckverbindung (7) miteinander verbunden sind.
